(19) Europäisches Patentamt / European Patent Office / Office européen des brevets

(11) **EP 4 498 321 A1**

(12) **EUROPEAN PATENT APPLICATION**

(43) Date of publication:
**29.01.2025 Bulletin 2025/05**

(21) Application number: **23306302.3**

(22) Date of filing: **27.07.2023**

(51) International Patent Classification (IPC):
**G06T 7/11** *(2017.01)*       **G06T 7/162** *(2017.01)*

(52) Cooperative Patent Classification (CPC):
**G06T 7/162; G06T 7/11;** G06T 2207/10072;
G06T 2207/10081; G06T 2207/20072;
G06T 2207/20084; G06T 2207/30008

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **MinMaxMedical
38400 Saint-Martin-d'Hères (FR)**

(72) Inventors:
• **MONIN, Maxime
38400 SAINT-MARTIN-D'HERES (FR)**
• **CLERE, Arnaud
38400 SAINT-MARTIN-D'HERES (FR)**

(74) Representative: **Regimbeau
20, rue de Chazelles
75847 Paris Cedex 17 (FR)**

(54) **METHOD AND SYSTEM FOR SEGMENTING A 2D OR 3D IMAGE**

(57)    The invention relates to a computer implemented method for segmenting an image, comprising

S0: obtaining a 2D/3D initial image (I) of a region of interest of an element including a structure (B);

S1: processing the 2D/3D initial image (I) for initially segmenting the structure (B) delimited by a main outline (MO);

S2: defining on the 2D/3D image (I), a first area (A1) delimited by a first outline (1) including the pixels/voxels of the structure (B) and a second area (A2) delimited by a second outline (2) around and outside the structure (B), the first and the second areas (A1, A2) being function of a margin error of the first segmentation of step S1; the main outline (MO) being located between the first outline (1) and the second outline (2), an uncertainty zone (UZ) being between the first outline (1) and the second outline (2), the uncertainty zone (UZ) comprising pixels/voxels to be classified as belonging to the structure (B) or not;

S4: applying a graph cut algorithm on a graph where the pixels or voxels of the first area (A1) are foreground seeds and the pixels or voxels of the second area (A2) are the background seeds, for affecting each node of the graph to the foreground or the background, the foreground corresponding to the pixels/voxels of the structure thus resulting in a refined segmentation;

S5: classifying the pixels/voxels of the 2D or 3D image according to their distance to the main outline and/or a refined outline (RO

FIG. 3

**Description**

**FIELD OF THE INVENTION**

The invention relates to a method and a system for segmenting a 2D or 3D image for instance of a subject, a patient, a structure. In particular, the 2D or 3D image contains a structure to be segmented for instance a bone.

**BACKGROUND OF THE INVENTION**

In image processing, the segmentation consists in classifying each pixel or voxel of a 2D or 3D image as "in" (in the bone to be segmented) or "out" (outside the bone to be segmented).

A precise segmentation is desirable and needs to follow accurately the most visible outline of the object in the image.

For instance, in orthopedic surgery, bone segmentation in the images can be performed manually by an annotator, with the help of interactive annotation and image processing tools, and/or automatically by segmentation algorithms. More generally, any structure segmentation can be performed manually.

However, manual methods are inherently subject to human bias and are not very accurate, semi-manual methods are very complicated and time consuming. With automatic methods, gains in practicality and speed are offset by lower accuracy and/or genericity. Thus, these methods are not satisfactory for obtaining segmentation with accuracy and precision for segmenting structures for instance in Computed Tomography (CT) or Cone Beam Computed Tomography (CBCT) images.

**BRIEF DESCRIPTION OF THE INVENTION**

A goal of the invention is to provide a method for segmenting structures, in particular bones, in a 2D or 3D image, preferably in a CT or CBCT image.

According to a first aspect, the invention concerns a computer implemented method for segmenting an image, comprising:

S0: obtaining a 2D/3D initial image of a region of interest of an element including a structure;

S1: processing the 2D/3D initial image for initially segmenting the structure delimited by a main outline;

S2: defining on the 2D/3D image, a first area delimited by a first outline including the pixels/voxels of the structure and a second area delimited by a second outline around and outside the structure, the first and the second areas being function of a margin error of the first segmentation of step S1; the main outline being located between the first outline and the second outline, an uncertainty zone being between the first outline and the second outline, the uncertainty zone comprising pixels/voxels to be classified as belonging to the structure or not;

S4: applying a graph cut algorithm on a graph where the pixels or voxels of the first area are foreground seeds and the pixels or voxels of the second area are the background seeds, for affecting each node of the graph to the foreground or the background, the foreground corresponding to the pixels/voxels of the structure thus resulting in a refined segmentation;

S5: classifying the pixels/voxels of the 2D or 3D image according to their distance to the main outline and/or a refined outline which is a boundary between the foreground and the background obtained at step S4.

The invention according to the first aspect may comprise by the following features, alone or in combination technically possible:

- the distance is an Euclidean distance or an oriented Euclidean distance;
- the method comprises a step of S3: defining a graph having nodes and edges connecting nodes, the nodes being the pixels/voxels of the 2D/3D initial image, each foreground seed being connected to a source and each background seed being connected to a sink, each edge having a weight computed from pixels/voxels of the 2D/3D initial image;
- the method comprises a step of S2': obtaining an object outline metric image the object outline metric image corresponding to the 2D/3D initial image filtered for enhancing the contrast of the pixels/voxels of the uncertainty zone relative to the other pixels/voxels;
- the object outline metric image is defined as follows:

$$M = f(I, MO)$$

where *I* is the 2D or 3D image, *MO* is the main outline and *f* is a function based on a Hessian image of the 2D/3D initial image *I*, that is, an image of the Hessian matrix noted *H* containing all second-order derivatives of *I* on each pixel/voxel;

- the method comprises a step of S3: defining a graph having nodes and edges connecting nodes, the nodes being the pixels/voxels of the object outline metric image, each foreground seed being connected to a source and each background seed being connected to a sink, each edge having a weight defined by

$$w_{ij} = \begin{cases} e^{-\frac{(M_i - M_j)^2}{2\sigma^2}}, & M_i > M_j \text{ and } \boldsymbol{n}(\boldsymbol{x_i})^{\mathrm{T}} \dfrac{\boldsymbol{x_i} - \boldsymbol{x_j}}{\left\|\boldsymbol{x_i} - \boldsymbol{x_j}\right\|} > -0.5, \\ 1, & \text{otherwise.} \end{cases}$$

where *i* is the index of a voxel, *j* is the index of a neighbor of *i*, $x_i$ and $x_j$ are respectively the vectors of coordinates of the voxel *i* and *j*, $M_i$ and $M_j$ are the intensity of the pixel/voxel of the object outline metric image.

- the structure comprises at least one bone.
- the first area is obtained by reducing the main outline of the error margin and the second area is obtained by expanding the main outline of the error margin, the error margin being for instance $\pm 2$ *mm.*
- the image is a CT or CBCT image;
- the step S1 is implemented automatically for instance by processing the 2D or 3D image by a trained neural network.
- the step S1 is implemented manually annotating individual voxels to collecting the machine learning inference of a trained neural network, can also be used.

**[0009]** According to a second aspect, the invention concerns a data processing apparatus comprising a processor configured to perform the steps of the method of the first aspect of the invention.

**[0010]** According to third aspect, the invention concerns a computer program product comprising instructions which, when the program is executed by a computer, cause the computer to carry out the steps of the method of the first aspect of the invention.

**[0011]** The invention permits to obtain a segmentation:

- "Controlled" in the sense that it considers the result of at least two segmentations to identify pixels/voxels in as many categories as there are structures to segment, and an "unsure" category for pixels/voxels that may or may not belong to one or more structures to segment. The initial segmentation provides a model for each structure and the method checks their result against the visible boundary in the image to be segmented.
- "Precise" in the sense that the result is determined according to the most visible object boundary in the image (as defined by a mathematic function rather than depending on different evaluations by annotators), and cuts as short as possible in image areas with no visible boundary.
- "Fair" in the sense that, for each uncertain pixel/voxel, the method applies the reclassifications deemed best by several competent annotators, independent of the initial annotation.

**[0012]** The method can be adapted in different ways for images and initial segmentation methods with different characteristics. For example:

- The algorithms used for initial segmentation can be one or more inference models specific to the structures to be segmented, or a combination of statistical shape models on the location and shape of structures in the image. The combination of several models is particularly interesting when segmenting an image in which several structures are in contact, as it reduces the area of uncertainty for each of these structures (for bones, e.g., femur / patella).
- The graphcut cost function adapted to CBCT also works on CT and is adapted to 2D X-ray images.

**[0013]** To sum up, the method combines the precise boundaries objectively visible in the image to be segmented with one or more models of the structure to be segmented based on manual segmentation or a shape a priori or a training set. These provide a robust but coarse initial segmentation and, through various mathematical operations, a limited band of uncertainty in which the graphcut will determine a unique boundary. The method then determines the final classification of voxels according to their deviation (magnitude and sign) from this boundary.

## BRIEF DESCRIPTION OF THE DRAWINGS

**[0014]** Further features and advantages of the invention will be apparent from the description that follows, based on the appended drawings, wherein:

- Figure 1 illustrates steps of a method according to the invention;
- Figure 2 illustrates two 2D images of a bone: on the left a 2D coronal slice, on the right a 2D sagittal slice;
- Figure 3 illustrates a 2D image comprising a region having a background, a foreground, a main outline and a refined outline;
- Figure 4 illustrates the 2D image of figure 2 filtered according to a second filtering process;
- Figure 5 illustrates the 2D image of figure 2 filtered according to a third filtering process.

## DETAILED DESCRIPTION OF EMBODIMENTS OF THE INVENTION

The described method relates to a computer-implemented method for segmenting a 2D or 3D image of an element including a structure. The aim of the method is to segment a 2D or 3D image for highlighting one or many relevant structure(s) present in the 2D or 3D image.

### Initial image

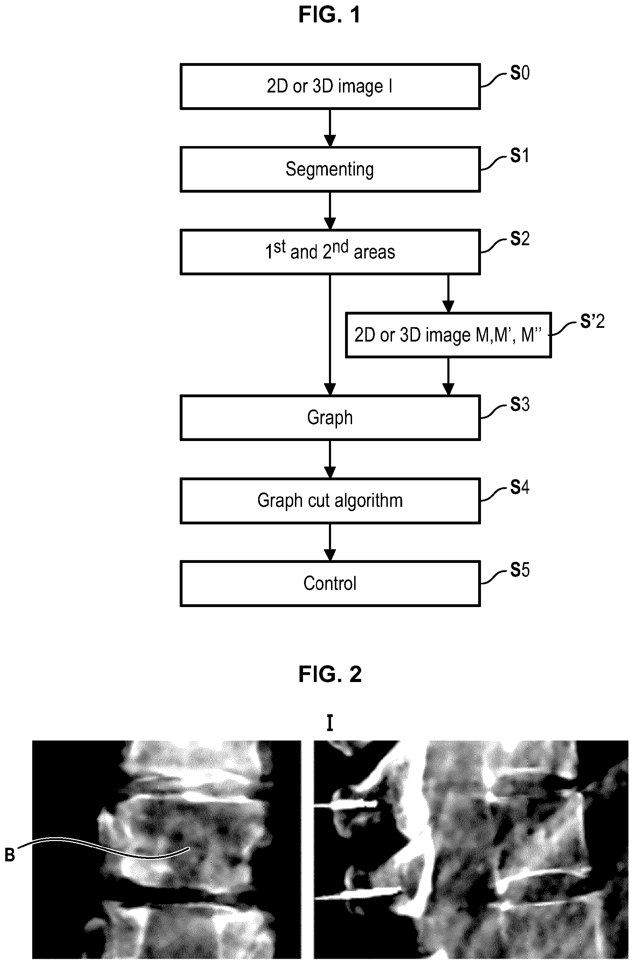

With reference to **figure 1** and **figure 2**, this method comprises a step S0 of obtaining an initial 2D or 3D image I of the element, the 2D or 3D image having been previously acquired by means of a well-known imaging system. The 2D or 3D initial image is a CT or CBCT image of a region of interest of the element including the structure. For instance, the 2D or 3D image is a medical image wherein the element is a bone B to be segmented. On figure 2 a CBCT image of a region of interest of a patient is shown, this image I comprises a vertebra (i.e., a bone B): the left part shows a 2D coronal slice of a vertebra and the right part shows a 2D sagittal slice of a vertebra.

### Initial segmentation

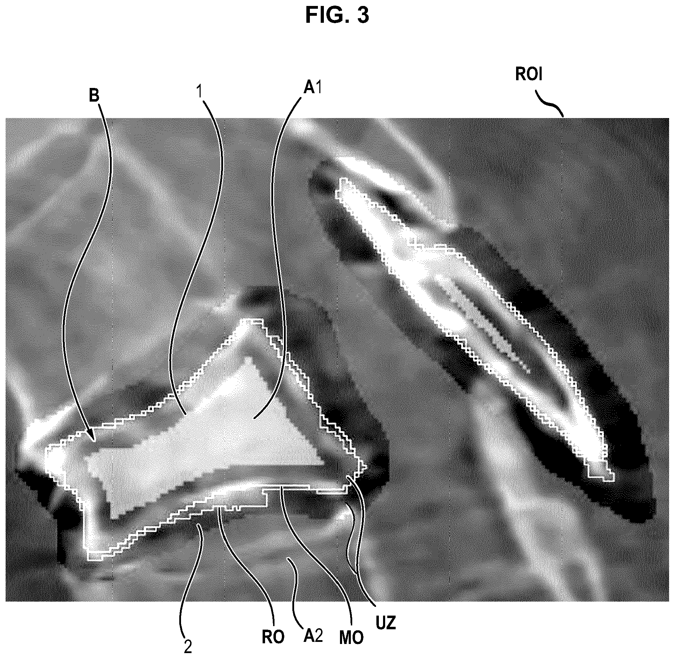

With reference to **figure 3**, in a step S1, the initial 2D or 3D image is processed for first segmenting the structure and obtaining a main outline MO delimiting the structure B. This step S1 permits to roughly delimit the structure and can be implemented manually or automatically for instance by processing the 2D or 3D image by a trained neural network. Any known segmentation technique with any degree of automation, from manually annotating individual voxels to collecting the machine learning inference of a trained neural network, can also be used.

### First area, second area, main outline

The main outline MO along with the initial 2D/3D image is processed in a step S2 for defining on the 2D or 3D initial image $I$ , :

- a first area A1, delimited by a first outline 1 is inside the structure B and includes pixels/voxels of the structure B ; and
- a second area A2 delimited by a second outline 2 around and outside the structure B.

Thus, the main outline MO is located between the first outline 1 and the second outline 2 and an uncertainty zone UZ is defined between the first outline 1 and the second outline 2, the uncertainty zone UZ comprising pixels/voxels to be classified as belonging to the structure B or not to refine the initial segmentation of step S1.

Thus, the uncertainty zone UZ is a zone to be re-segmented and advantageously depends on error margins of the initial segmentation in step S1.

In other words, for defining this uncertainty zone UZ the first and second areas A1, A2 take into account a margin error of the initial segmentation (step S1). For instance, the first area A1 is obtained by reducing the main outline MO of the error margin and the second area A2 is obtained by expanding the main outline MO of the error margin, the error margin being for instance $\pm 2$ $mm$ in each dimension of the 2D or 3D image.

Alternatively, the first and second areas A1, A2 depend on an error margin of the trained neural network that can be used in step S1. The neural network can output probabilities to allocate pixels or voxels to the structure and is used on image corresponding to the structure to be segmented. In that case, the error margins can be bounds on probability of belonging to the structure or to another class. These are a characteristic of the segmentation method used in step S1 which is determined beforehand on a dataset and does not depend, or hardly depends, on the image obtained in step S0 (it is however possible to establish characteristics of the initial segmentation of step S1 which are different for different datasets and determine which dataset the image obtained at step S0 belongs to in order to choose the margins).

The error margins therefore correspond to defining a zone in which we are "sufficiently sure" that the segmentation is correct, and a zone in which reliability is insufficient.

Filtering process

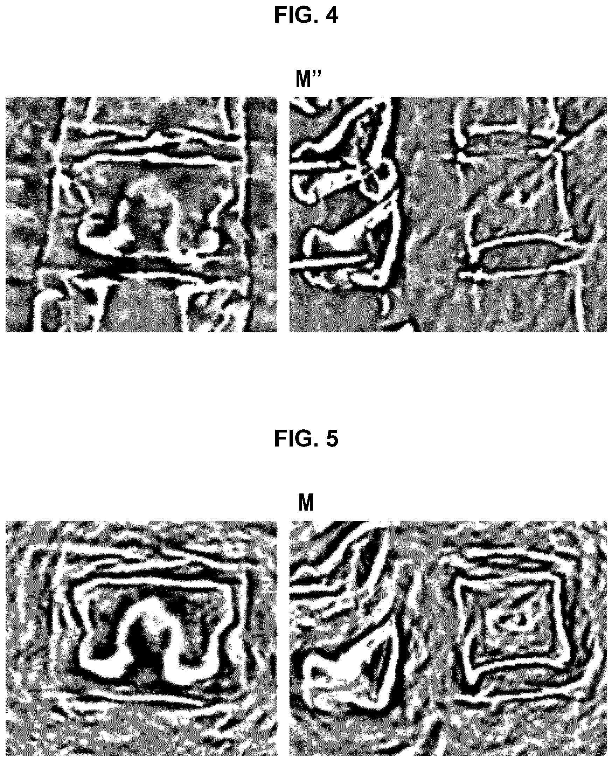

In an embodiment, the 2D/3D initial image is filtered in a step S2' for obtaining an object outline metric image, *M, M', M"*. The object outline metric image corresponds to the 2D/3D initial image *I* filtered for enhancing the contrast of the pixels/voxels of the uncertainty zone UZ relative to the other pixels/voxels. As can be seen on figure 4 and figure 5 the 2D/3D initial image *I* is filtered to better identify the different areas.

The filtering of the initial 2D/3D image *I* can be made according to a first filtering process, according to a second filtering process or according to a third filtering process as described below.

First filtering process:

A first filtering process is based on process described in Frangi et al. (1998) and permits to obtain from the 3D initial image *I*, an object outline metric image *M'* which is a shape metric image adapted to object having tubular surface and is a function *f'* applied to the initial image 2D/3D: $M' = f'(I)$.

In particular, this first filtering process is based on local information about the shape of structures in image *I* captured in a Hessian matrix noted *H* containing all second-order derivatives of *I* on each pixel/voxel and defined as follows:

$$H = \begin{bmatrix} \dfrac{\partial^2 I}{\partial x^2} & \dfrac{\partial^2 I}{\partial x \partial y} & \dfrac{\partial^2 I}{\partial x \partial z} \\ \dfrac{\partial^2 I}{\partial y \partial x} & \dfrac{\partial^2 I}{\partial y^2} & \dfrac{\partial^2 I}{\partial y \partial z} \\ \dfrac{\partial^2 I}{\partial z \partial x} & \dfrac{\partial^2 I}{\partial z \partial y} & \dfrac{\partial^2 I}{\partial z^2} \end{bmatrix}$$

The Hessian matrix measures the contrast level in any direction of each pixel/voxel. Notably, its eigenvalues (denoted $\lambda_1, \lambda_2, \lambda_3$) indicate the difference in intensity contrast along their associated eigenvectors.

Since, sanguine vessels in 3D images have a tubular shape, they derive from the eigenvectors a "vessel likeliness" metric that measures the likeliness of voxels to be located along tubular structures.

Second filtering process:

A second filtering process is based on process described in Krčah et al. (2011) and permits to obtain from the 3D initial image *I* , an object outline metric image *M"* which is a shape metric image adapted to object having planar surface. This process is a "bone boundary enhancement filter" for 3D CT images.

This second filtering process uses the eigenvalues of the Hessian matrix above: If $\lambda_3$ is large relative to $\lambda_1$ and $\lambda_2$, this voxel is likely on a planar boundary (i.e., the cortical surface) that is oriented orthogonally to the third eigenvector.

The process of computing the object outline metric image *M"*

$$M'' = f''(I)$$

is called contrast-enhancing filtering because it results in an image in which the intensity contrast along the boundary of the desired structures within the image are accentuated. The result is illustrated on figure 4.

Third filtering process

A third filtering process implements features of the first filtering process and second filtering process.

However, one can note that the eigenvector associated with the largest eigenvalue of *H* locally defines the direction of maximum contrast and is used to compute *M*. This direction may have an arbitrary orientation with respect to the object of interest B.

On figure 5, the image M is a CBCT image in which the contrast at the bone border is accentuated and the range of the pixels is normalized. This image is defined as follows:

$$M = f(I, MO)$$

where *I* is the 2D/3D initial image, *MO* is the main outline and *f* is a function that combines three vector images as follows:

i) a signed Euclidean distance field of the initial segmentation is calculated: each pixel/voxel of the corresponding image contains the Euclidean distance to the nearest pixel/voxel of the segmentation surface. This distance is negative inside the segmentation and positive outside.

ii) The normalized gradient of this image is a first vector image *n* varying continuously and perpendicularly to the segmentation surface.

iii) For each voxel, the singular value decomposition of the Hessian matric *H* is calculated to obtain the singular vector w associated with the smallest singular value. A 2nd vector image *u* is obtained by taking the vector product *u* = *n* × *w*. This second vector image *u* contains the direction of maximum intensity variation in the local plane of the segmentation surface.

iv) The third vector image *v* is obtained by the vector product *v* = *n* × *u*. Thus, an orthonormal basis (*u,v,n*) is defined such that *u* and *v* are in the plane of the surface and *n* is normal to the surface.

v) These three vector images are combined to form the object outline metric image *M* as explained in the following. From each vector, we compute the directed contrasts:

$$\lambda_1 = v^T H v$$

$$\lambda_2 = u^T H u$$

$$\lambda_3 = n^T H n$$

and use these values instead of the eigenvalues of H in the computation of the metric.

Thus, with this definition of the metric, the function f leverages not only the initial 2D/3D image *I* (see first and second filtering process) but also the main outline MO to enhance the gradients orthogonal to the main outline MO as opposed to the outline of nearby, undesired objects which are frequently oriented in other directions. We thus exploit the main outline MO by taking the gradient of its Euclidean distance image (i.e., the image for which the value of each pixel/voxel is its Euclidean distance to the MO).

<u>Definition of the graph</u>

The different areas (and possibly filtered image M, M', M") permit to define, in a step S3, a graph having nodes and edges connecting nodes, the nodes being the pixels/voxels of the 2D/3D initial image, in addition to two "terminal" nodes called source and sink.

Next, a set of weighted edges connecting all nodes of the graph is defined. The segmentation of the image via the graphcut algorithm is obtained by removing ("cutting") edges until the graph is partitioned into two unconnected sets of nodes. In this final state, the source node is directly or transitively connected to all nodes of one set and all nodes of the other set are directly or transitively connected to the sink 'node.

Thus, the weight of an edge is a penalty associated with "cutting" the graph between these two nodes, in other words, considering the start node as foreground and the end node as background. A low weight indicates that the start node is a good foreground candidate, and the finish node is a good background candidate. In this context an edge is created between the source and each foreground seed pixel/voxel. The same applies to the sink and each background seed pixel/voxel. The weight associated with each of these edges is an arbitrarily large value (the largest possible floating-point number, for example). This has the effect that seed pixels/voxels are already segmented and their classification will not be modified by refinement.

Edges are created between each node/voxel and its neighboring nodes/voxels (six for 3D and four for 2D). The weight of each of these edges depends o'n the image considered (filtered or not).

The set of edge weights is noted W.

The boundary terms refer to weighted edges between neighbor pixel/voxel nodes where, for example:

$$w_{ij} = \frac{1}{1 + \left\| I_i - I_j \right\|}$$

for all pairs of adjacent voxels indexed *i* and *j*.

The regional terms refer to weighted edges between a pixel/voxel node and a terminal (source or sink) node. Prior information from individual voxel intensity can be included in the regional term. For instance, CT images are in calibrated Hounsfield units, with a maximum value of 3071, and cortical bones generally have an intensity larger than 300. Thus, the source-to-voxel node (with indices $s$ and $i,$ respectively) weight:

$$w_{si} = \frac{max(0, \boldsymbol{I}_i - 300)}{2771}$$

encourages considering voxels with intensity larger than 300 as foreground. Edges between foreground/background seeds and source/sink nodes are another example of regional terms.

Alternatively, in case the 2D/3D image is filtered the graph (see step S2') has nodes and edges connecting nodes, the nodes being the pixels/voxels of the object outline metric image, each foreground seed being connected to a source and each background seed being connected to a sink, each edge having a weight defined by

$$w_{ij} = \begin{cases} e^{-\frac{(M_i - M_j)^2}{2\sigma^2}}, & M_i > M_j \text{ and } \boldsymbol{n}(\boldsymbol{x_i})^{\mathrm{T}} \frac{\boldsymbol{x_i} - \boldsymbol{x_j}}{\|\boldsymbol{x_i} - \boldsymbol{x_j}\|} > -0.5, \\ 1, & \text{otherwise.} \end{cases}$$

where $i$ is the index of a voxel, $j$ is the index of a neighbor of $i$, $x_i$ and $x_j$ are respectively the vectors of coordinates of the voxel $i$ and $j$, $M_i$ and $M_j$ are the intensity of the pixel/voxel of the object outline metric image, $\sigma$ is a normalization factor equal for example to 0.1. The edge weight is therefore low (close to 0) when the following conditions are satisfied:

a) the pixel/voxel has a metric $M_i$ much greater than the one of its neighbour;
b) the edge is oriented relatively parallel to and in the same direction as the oriented normal segmentation surface obtained in step S1, whose shape, beyond the zone of uncertainty, is deemed reliable.

Otherwise, if these conditions are not met, the edge has a weight close to 1.

Regardless of whether the image is filtered or not for the graph, the pixels or voxels of the first area A1 are foreground seeds and the pixels or voxels of the second area A2 are the background seeds of the graph.

Graph cut algorithm

Once the graph is defined, a step S4 of applying a graph cut algorithm on the defined graph is implemented for obtaining a refined outline RO to classify the pixels/voxels of the uncertainty zone UZ as belonging to the background or the foreground, the foreground corresponding to the pixels/voxels of the structure.

Thus, the graph cut algorithm, fully parameterized by edge weights, calculates the minimum graph cut, i.e., the foreground/background partitioning of all nodes that minimizes the sum of the weights of all cut links, resulting in a refined outline RO. The graphcut result is a refined segmentation of the 2D/3D initial image.

Verification

Then, it is useful to verify if the result of this new segmentation is relevant. To do that, in a step S5 a classification of the pixel/voxels according to their distance from the main outline MO and or the refined outline RO, obtained in step S4, into the structure, another structure not relevant or "unsure".

For example, for bone segmentations in CBCTs that are reviewed by practitioners, we compare the first segmentation of step S1 with the refined segmentation of step S4 and distinguish at least three cases:

- The result of the refined segmentation in step S4 confirms the initial segmentation
- The results are not far apart: in this case, the refined segmentation is accepted.
- The results are very distant: in this case, the user is asked to confirm the initial segmentation, or to use the refined segmentation.

Alternatively, one or more datasets can be annotated by several independent annotators to establish a consensus and characterize the probability that a pixel/voxel belongs to one of the classes as a function of its distance from each of the segmentations obtained in step S1 and S4.

In other words, step S5 consists in classifying the pixels/voxels of the 2D or 3D image according to their distance to the main outline and/or a refined outline RO which is the boundary between the foreground and the background obtained at step S4.

The invention is not limited to the above-described method but also extends to a data processing apparatus comprising a processor configured to perform the steps of the above-described method as well as to a computer program product comprising instructions which, when the program is executed by a computer, cause the computer to carry out the steps of the above-described method.

REFERENCES

Frangi, Alejandro F., et al. "Multiscale vessel enhancement filtering." Medical Image Computing and Computer-Assisted Intervention-MICCAI'98: First International Conference Cambridge, MA, USA, October 11-13, 1998 Proceedings 1. Springer Berlin Heidelberg, 1998.
Kr6ah, Marcel, Gábor Székely, and Rémi Blanc. "Fully automatic and fast segmentation of the femur bone from 3D-CT images with no shape prior." 2011 IEEE international symposium on biomedical imaging: from nano to macro. IEEE, 2011.

**Claims**

1. Computer implemented method for segmenting an image, comprising

    S0: obtaining a 2D/3D initial image (I) of a region of interest of an element including a structure (B);
    S1: processing the 2D/3D initial image (I) for initially segmenting the structure (B) delimited by a main outline (MO);
    S2: defining on the 2D/3D image (I), a first area (A1) delimited by a first outline (1) including the pixels/voxels of the structure (B) and a second area (A2) delimited by a second outline (2) around and outside the structure (B), the first and the second areas (A1, A2) being function of a margin error of the first segmentation of step S1; the main outline (MO) being located between the first outline (1) and the second outline (2), an uncertainty zone (UZ) being between the first outline (1) and the second outline (2), the uncertainty zone (UZ) comprising pixels/voxels to be classified as belonging to the structure (B) or not;
    S4: applying a graph cut algorithm on a graph where the pixels or voxels of the first area (A1) are foreground seeds and the pixels or voxels of the second area (A2) are the background seeds, for affecting each node of the graph to the foreground or the background, the foreground corresponding to the pixels/voxels of the structure thus resulting in a refined segmentation;
    S5: classifying the pixels/voxels of the 2D or 3D image according to their distance to the main outline and/or a refined outline (RO) which is a boundary between the foreground and the background obtained at step S4.

2. The method according to claim 1, wherein the distance is an Euclidean distance or an oriented Euclidean distance.

3. The method according to claims 1 to 2, comprising a step of S3: defining a graph having nodes and edges connecting nodes, the nodes being the pixels/voxels of the 2D/3D initial image, each foreground seed being connected to a source and each background seed being connected to a sink, each edge having a weight computed from pixels/voxels of the 2D/3D initial image.

4. The method according to claims 1 to 2, comprising a step of S2': obtaining an object outline metric image (M, M', M") the object outline metric image corresponding to the 2D/3D initial image filtered for enhancing the contrast of the pixels/voxels of the uncertainty zone (UZ) relative to the other pixels/voxels.

5. The method according to claim 4, wherein the object outline metric image (M) is defined as follows:

$$M = f(I, MO)$$

where $I$ is the 2D or 3D image, $MO$ is the main outline and $f$ is a function based on a Hessian image of the 2D/3D initial image $I$, that is, an image of the Hessian matrix noted $H$ containing all second-order derivatives of $I$ on each pixel/voxel.

6. The method according to claims 4 to 5, comprising a step of S3: defining a graph having nodes and edges connecting nodes, the nodes being the pixels/voxels of the object outline metric image, each foreground seed being connected to a source and each background seed being connected to a sink, each edge having a weight defined by

$$w_{ij} = \begin{cases} e^{-\frac{(M_i - M_j)^2}{2\sigma^2}}, & M_i > M_j \text{ and } n(x_i)^{\mathrm{T}} \dfrac{x_i - x_j}{\|x_i - x_j\|} > -0.5, \\ 1, & \text{otherwise.} \end{cases}$$

where $i$ is the index of a voxel, $j$ is the index of a neighbor of $i$, $x_i$ and $x_j$ are respectively the vectors of coordinates of the voxel $i$ and $j$, $M_i$ and $M_j$ are the intensity of the pixel/voxel of the object outline metric image.

7. The method according to claims 1 to 6, wherein the structure comprises at least one bone.

8. The method according to claims 1 to 7, wherein the first area is obtained by reducing the main outline of the error margin and the second area is obtained by expanding the main outline of the error margin, the error margin being for instance $\pm 2$ *mm*.

9. The method according to claims 1 to 8, wherein the image is a CT or CBCT image.

10. The method according to claims 1 to 9, wherein step S1 is implemented automatically for instance by processing the 2D or 3D image by a trained neural network.

11. The method according to claims 1 to 9, wherein step S1 is implemented manually annotating individual voxels to collecting the machine learning inference of a trained neural network.

12. Data processing apparatus comprising a processor configured to perform the steps of the method of claims 1 to 9.

13. A computer program product comprising instructions which, when the program is executed by a computer, cause the computer to carry out the steps of the method of any one of claims 1 to 9.

## FIG. 1

## FIG. 2

# FIG. 3

# FIG. 4

M''

# FIG. 5

M

Europäisches
Patentamt

European
Patent Office

Office européen
des brevets

# EUROPEAN SEARCH REPORT

Application Number

**EP 23 30 6302**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | XUESONG LU ET AL: "Fully automatic liver segmentation combining multi-dimensional graph cut with shape information in 3D CT images", SCIENTIFIC REPORTS, vol. 8, no. 1, 16 July 2018 (2018-07-16), XP055624132, DOI: 10.1038/s41598-018-28787-y | 1-3,8,9, 12,13 | INV. G06T7/11 G06T7/162 |
| Y | * Sections: Abstract, Materials and Methods, Automatic Graph Construction; figures 2, 3 * | 4-7,10, 11 | |
| Y | MARCEL KRCAH ET AL: "Fully automatic and fast segmentation of the femur bone from 3D-CT images with no shape prior", 2011 8TH IEEE INTERNATIONAL SYMPOSIUM ON BIOMEDICAL IMAGING: FROM NANO TO MACRO (ISBI 2011), IEEE, UNITED STATES, 30 March 2011 (2011-03-30), pages 2087-2090, XP031944951, DOI: 10.1109/ISBI.2011.5872823 ISBN: 978-1-4244-4127-3 * Sections: Abstract, 2.2 * | 4-7 | |
| Y | LU FANG ET AL: "Automatic 3D liver location and segmentation via convolutional neural network and graph cut", INTERNATIONAL JOURNAL OF COMPUTER ASSISTED RADIOLOGY AND SURGERY, SPRINGER, DE, vol. 12, no. 2, 7 September 2016 (2016-09-07), pages 171-182, XP036144411, ISSN: 1861-6410, DOI: 10.1007/S11548-016-1467-3 [retrieved on 2016-09-07] * Abstract * | 10,11 | |

**TECHNICAL FIELDS SEARCHED (IPC)**

G06T

-/--

The present search report has been drawn up for all claims

| Place of search | Date of completion of the search | Examiner |
|---|---|---|
| Munich | 30 January 2024 | Tibrewal-Fabricius |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

**EP 4 498 321 A1**

Application Number

EP 23 30 6302

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Wu Dijia ET AL: "Segmentation of Multiple Knee Bones from CT for Orthopedic Knee Surgery Planning : 17th International Conference, Boston, MA, USA, September 14-18, 2014, Proceedings, Part I" In: "Medical Image Computing and Computer-Assisted Intervention - MICCAI 2014 : 17th International Conference, Boston, MA, USA, September 14-18, 2014, Proceedings, Part I", 1 January 2014 (2014-01-01), Springer International Publishing, Cham, XP093124587, ISSN: 0302-9743 ISBN: 978-3-319-10404-1 vol. 8673, pages 372-380, DOI: 10.1007/978-3-319-10404-1_47, Retrieved from the Internet: URL:https://www.cs.rpi.edu/~sofka/pdfs/wu-miccai14.pdf> * the whole document * | 1-13 | |
| A | JP 6 355766 B2 (SIEMENS INDUSTRY SOFTWARE INC) 11 July 2018 (2018-07-11) * the whole document * | 1-13 | |
| A | MASTMEYER ANDRE ET AL: "Efficient patient modeling for visuo-haptic VR simulation using a generic patient atlas", COMPUTER METHODS AND PROGRAMS IN BIOMEDICINE, ELSEVIER, AMSTERDAM, NL, vol. 132, 5 May 2016 (2016-05-05), pages 161-175, XP029570544, ISSN: 0169-2607, DOI: 10.1016/J.CMPB.2016.04.017 * Section 2.2.2; figure 8 * | 1-13 | |

**TECHNICAL FIELDS SEARCHED (IPC)**

The present search report has been drawn up for all claims

| Place of search | Date of completion of the search | Examiner |
|---|---|---|
| Munich | 30 January 2024 | Tibrewal-Fabricius |

EPO FORM 1503 03.82 (P04C01)

page 2 of 2

## ANNEX TO THE EUROPEAN SEARCH REPORT
## ON EUROPEAN PATENT APPLICATION NO.

EP 23 30 6302

This annex lists the patent family members relating to the patent documents cited in the above-mentioned European search report.
The members are as contained in the European Patent Office EDP file on
The European Patent Office is in no way liable for these particulars which are merely given for the purpose of information.

30-01-2024

| Patent document cited in search report | | Publication date | Patent family member(s) | | Publication date |
|---|---|---|---|---|---|
| JP 6355766 | B2 | 11-07-2018 | CN | 106663309 A | 10-05-2017 |
| | | | EP | 3164852 A1 | 10-05-2017 |
| | | | JP | 6355766 B2 | 11-07-2018 |
| | | | JP | 2017524432 A | 31-08-2017 |
| | | | US | 2016005166 A1 | 07-01-2016 |
| | | | WO | 2016003956 A1 | 07-01-2016 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Multiscale vessel enhancement filtering. Medical Image Computing and Computer-Assisted Intervention-MICCAI'98: First International Conference Cambridge, MA, USA. Springer, 1998

- Fully automatic and fast segmentation of the femur bone from 3D-CT images with no shape prior. **KR6AH, MARCEL ; GÁBOR SZÉKELY ; RÉMI BLANC**. 2011 IEEE international symposium on biomedical imaging: from nano to macro. IEEE, 2011